# EUROPEAN PATENT SPECIFICATION

(11) **EP 2 493 158 B1**
(45) Date of publication and mention of the grant of the patent: **01.11.2017**
(21) Application number: 11155480.4
(22) Date of filing: 22.02.2011
(51) Int. Cl.: H04M 1/725

(54) **Apparatus and method for managing call notes in a wireless device**
Vorrichtung und Verfahren zur Verwaltung von Anrufhinweisen in einer drahtlosen Vorrichtung
Appareil et procédé pour la gestion de notes d'appel dans un dispositif sans fil

(43) Date of publication of application: 29.08.2012
(73) Proprietor: BlackBerry Limited, Waterloo, ON N2K 0A7 (CA)
(72) Inventor: Khosravi, Bardia, Waterloo Ontario N2L 5Z5 (CA)
(74) Representative: Fennell, Gareth Charles

(56) References cited:
- EP-A1- 2 224 324
- US-A1- 2003 148 753

## Description

The present disclosure relates generally to a wireless device, such as a cellular phone, or other wireless device that may be used in a wireless communication system. More particularly, the present disclosure relates to an apparatus and a method for managing call notes associated with a call in a wireless device.

### Background of the Invention

Wireless devices, which can include cellular telephones, tablet personal computers, computers, and other data processing devices, are used by many throughout the world to communicate and perform various data processing tasks. Such wireless devices can communicate voice, text, images, video, data files, command and control information, and the like.

Many wireless devices can initiate or receive or otherwise communicate wirelessly in a call, such as a wireless telephone call, a cellular call, or a wireless voice over Internet protocol (VOIP) call. When some wireless devices are in an active call (i.e., actively communicating in a call), the user can create a note, or other data set, that becomes associated with that active call. Such a note can be referred to as a "call note." Such call notes can include a data set containing text data, or other type of data set that may include image data, a multimedia data file, or other data that the user wants to associate with the active call.

A call note can be created during an active call by selecting appropriate buttons or menu items in the user interface of the wireless device. As the user types or enters data for the call note, a display on the wireless device can display the progress of entering and/or editing of the note, or otherwise give feedback indicating the data entry for the call note. Many wireless devices include keyboards or keyboard equivalents, which can be used to type a call note containing text.

Once a call note has been created in an active call, it can be unsettling or confusing when the active call screen returns to the display and there is no indication that a call note is associated with the active call. Additionally, it may not be apparent that a user can recall the newly created call note to read it or edit it.

In view of these deficiencies in the operation of wireless devices, an improved apparatus and method for managing call notes in a wireless device is needed. It is in view of this background information related to the design and use of a wireless device the significant improvements of the present disclosure have evolved.

US Patent Application Publication No. US 2003/0148753 is directed toward a computer-implemented system and method for creating a note in a mobile communication device. The method includes creating a call note if a phone call is in progress. The call note includes call data that are related to the phone call. The call note is also associated with an entry in a call log. The method may be implemented by computer-executable components loaded into the memory of a mobile communication device.

European Patent Application EP 2 224 324 A1 describes a method for providing a notification on a portable electronic device includes: providing an application for managing events that is associated with an icon and executable by a processor and rendering a visually modified icon corresponding to said icon for display on a display screen of the portable electronic device in response to occurrence of a new event. The visually modified icon includes a counter for indicating a number of new events and when the number of new events is zero, the processor of the portable electronic device fails to render the visually modified icon for display on the display screen.

### Brief Description of the Drawing

FIG. 1 illustrates a wireless device having a display;
FIG. 2 depicts a high-level functional block diagram of an electronic assembly for operation of the wireless device shown in FIG. 1;
FIG. 3 is a high-level flowchart illustrating a method of managing call notes and displaying information associated with call notes, in accordance with an example embodiment of the present disclosure; and
FIGs. 4, 5 and 6 depict a display of the wireless device shown in FIG. 1, in accordance with an example embodiment of the present disclosure.

### Detailed Description

An embodiment of the present disclosure advantageously provides an apparatus and a method for managing call notes in a wireless device. The disclosure generally relates to a wireless device, which is a portable electronic device in the embodiments described herein. Examples of wireless devices include mobile, or handheld, wireless communication devices such as pagers, cellular phones, cellular smart-phones, wireless organizers, personal digital assistants, wirelessly enabled notebook computers, tablet computers, handheld computers, and so forth.

For simplicity and clarity of illustration, reference numerals may be repeated among the figures to indicate corresponding or analogous elements. Numerous details are set forth to provide an understanding of the embodiments described herein. Some embodiments may be practiced without these details. In other instances, well-known methods, procedures, and components have not been described in detail to avoid obscuring the embodiments described. The description should not be considered as limited to the scope of the embodiments described herein.

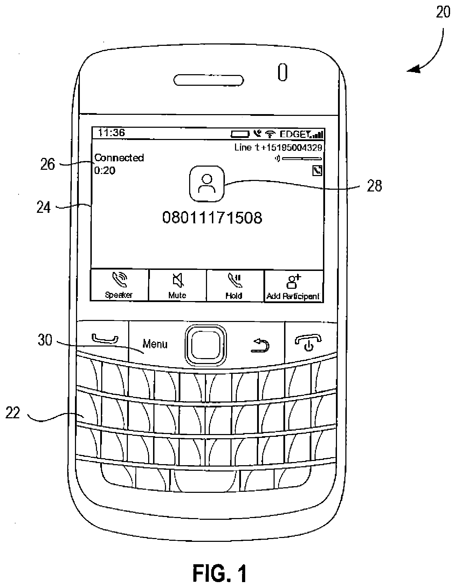

Referring first to FIG. 1, a representative wireless device 20 is depicted. Examples of wireless device 20 can include cellular telephones, tablet personal computers, computers, and other data processing devices, are used by many throughout the world to communicate and perform various data processing tasks. Such wireless devices 20 can initiate, receive, or otherwise engage in an active call, wherein wireless device 20 is configured and provides a function of conducting a call. Wireless device 20 may also be able to communicate text, images, video, data files, command and control information, and the like.

Wireless device 20 can include buttons or keyboard 22, which can be used by a user to operate wireless device 20 by selecting various menus and functions. Data, menus, and functions of wireless device 20 can also be displayed and selected (or otherwise manipulated) using display 24. In some embodiments, display 24 can be a touchscreen, which can be sensitive to human touch or input with a stylus. In other embodiments, keyboard 22 can be a display of keys or buttons arranged on display 24. Keyboard 22 and display 24 can be used together to enter text data into wireless device 20.

Displayed 24 can also be used to display text 26 and graphical information, such as icon 28. Menu button 30 can be used to initiate the entry of commands and invoking functions, such as functions that may require entering data, recalling data, or starting applications.

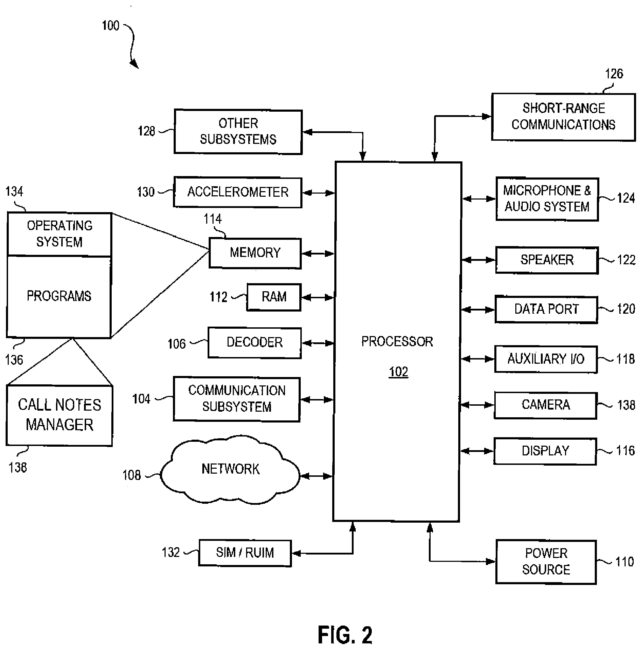

FIG. 2 depicts a high-level functional block diagram of an electronic assembly 100 for operating wireless device 20 shown in FIG. 1. Electronic assembly 100 can include multiple components, such as processor 102, which can control the overall operation of wireless device 20. Communication functions provided by wireless device 20 can include voice, data, and command communications, which may be performed by communication subsystem 104. Communication subsystem 104 can be used to initiate and support an active call. Communication subsystem 104 can include various combinations of hardware, software, and firmware to perform a designed function. The software can be functionally or conceptually divided into software modules. Software in one module may share or call upon functions in other modules.

Data received by wireless device 20 can be processed, including decompressed and decrypted, by decoder 106. Communication subsystem 104 can receive messages from, and send messages to, wireless network 108. Communication subsystem 104 can help initiate and operate an active call, wherein wireless device 20 is in a real-time voice communication session. Wireless network 108 may be any type of wireless network, including, but not limited to, a cellular network, a wireless data network, a wireless voice network, and a network that supports both voice and data communications. Wireless network 108 can use a variety of formats, such as those specified by standards including Global System for Mobile Communications (GSM), Code division multiples access (CDMA), wireless Ethernet (Institute of Electrical and Electronics Engineers standard 802.11), Wi-Fi, and other similar standards and wireless networks.

Power source 110 can provide power to operate wireless device 20, and can be implemented with one or more rechargeable batteries, or a port to an external power supply, wherein such power supply provides the appropriate power to all components of electronic assembly 100.

Processor 102 can interact with other components, such as random access memory (RAM) 112, memory 114, display 116 (illustrated in FIG. 1 as display 24), auxiliary input/output (I/O) subsystem 118, data port 120, speaker 122, microphone and audio system 124, short-range communications subsystem 126, and other subsystems 128. A user can enter data and operate functions of wireless device 20 with a data input device coupled to processor 102. Data input devices can include buttons or keyboard 22 (see FIG. 1), or with, in some embodiments, a graphical user interface produced on display 116, using touches and gestures detected using a touch-sensitive overlay on display 116. Processor 102 can interact with keyboard 22 and/or the touch-sensitive overlay via an electronic controller (which can be represented by other subsystems 128). As part of the user interface, information, such as text, characters, symbols, images, icons, and other items that may be displayed or rendered on wireless device 20, can be displayed on display 116. Processor 102 can interact with accelerometer 130, which may be used to detect a direction of gravitational forces, or user-input acceleration forces. In other embodiments, buttons, such as buttons and keyboard 22 in FIG. 1, can be used to operate select functions of wireless device 20.

To identify and authenticate a subscriber for obtaining access to wireless network 108, wireless device 20 can use a subscriber identity module or a removable user identity module (SIM/RUIM) card 132. Alternatively, user identification information can be programmed into memory 114.

Wireless device 20 can include operating system 134 and software programs 136, which can both be executed by processor 102. Operating system 134 and software programs 136 can be stored in a persistent, updatable store, such as memory 114. Additional applications or programs can be loaded onto wireless device 20 through wireless network 108, auxiliary I/O subsystem 118, data port 120, short-range communications subsystem 126, or any other subsystem 128 suitable for transferring program files. Software programs 136 can include software modules, such as call notes manager 138, which are responsible for a particular function within wireless device 20. Such software modules can call upon various hardware and software resources within wireless device 20 to execute its function.

A received signal, such as a text message, an e-mail message, or web page download can be processed by communication subsystem 104 and input to processor 102. Processor 102 can processes the received signal for output to the display 116 and/or to the auxiliary I/O subsystem 118. A wireless device user may generate data items, for example e-mail messages, which may be transmitted over wireless network 108 through communication subsystem 104. For voice communications, the overall operation of wireless device 20 can be similar. Speaker 122 can be used to output audible information converted from electrical signals, and microphone and audio system 124 can be used to convert audible information into electrical signals for processing.

Call notes manager module 138 can be used to create, recall, edit, display status information regarding call notes, and perform other management functions for call notes in wireless device 20. Data sets for call notes can be stored in memory 114, or temporarily in RAM 112. Call notes manager module 138 can display status, menus, icons, and similar data using display 116 (further shown as display 24 in FIG. 1).

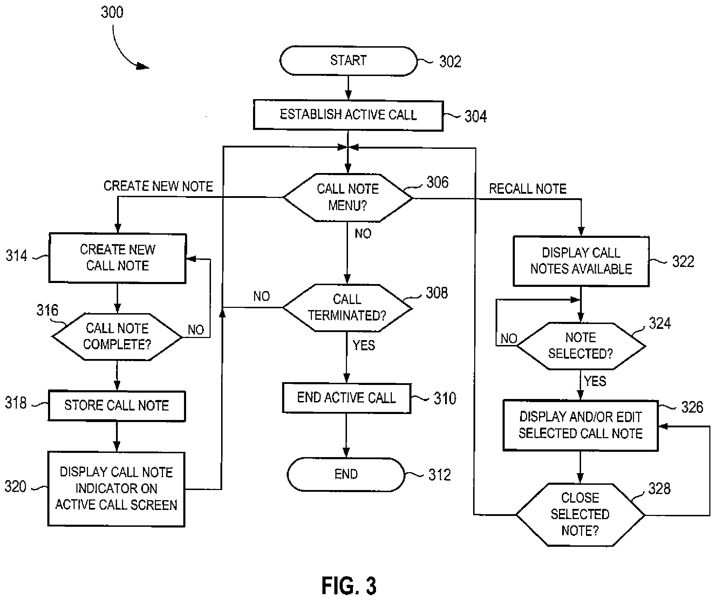

Referring now to FIG. 3, there is depicted a high-level flowchart illustrating an exemplary method of managing call notes, in accordance with one example embodiment of the present disclosure. The exemplary method can be controlled by software and executed on hardware shown in FIG. 2. For example, the method may be controlled by control notes manager module 138 and executed on processor 102 within electronic assembly 100.

As illustrated, method 300 begins at block 302, and continues at block 304, wherein the method establishes an active call for communicating in real time with another communication device. In one embodiment, the active call can be a cellular telephone call with another wired or wireless device. In one example, to establish an active call a user can enter a telephone number using keyboard 22 and press the send button to initiate a cellular telephone call. Other active calls can be established using an application installed on wireless device 20. Such applications can be illustrated as program 136 in FIG. 1, and can include a VOIP application that establishes an Internet or IP based active call.

After establishing the active call, method 300 determines whether or not a call note menu has been requested by the wireless device user, as depicted at block 306. In one embodiment, a user can request the call note menu by pressing a menu button (e.g., menu button 30 in FIG. 1) on wireless device 20. If the call note menu has not been requested, the method passes to block 308, wherein method 300 determines whether the active call has been terminated. If the active call has not been terminated, method 300 continues the active call and passes, via the no branch, to block 306, wherein the method iteratively determines whether or not the user has requested a call note menu. If the active call has been terminated, method 300 ends the active call, as illustrated at block 310. Thereafter, method 300 ends, as shown at block 312.

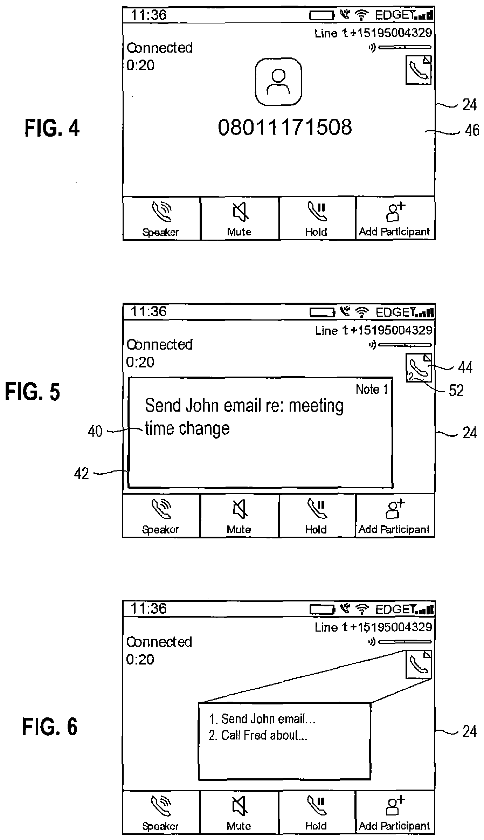

If, at block 306, the call note menu has been requested, the method determines whether a "create new note" function has been requested, or whether a "recall call note" function has been requested. If the user has selected the create new note function, method 300 begins creating a new call note, as illustrated at block 314. FIG. 5 is an example of the data that can be displayed on display 24 during the creation or editing of the call note. The process of creating the new call note can display text entered by the user with keyboard 22. As illustrated, text 40 of the new call note may be shown in an area 42 of display 24. The process of creating a new note can also include editing functions, which can allow the user to cut, paste, delete, move, and otherwise manipulate text or other call note data.

As the user is creating a new call note, method 300 iteratively determines whether or not the new call note is complete, as depicted at block 316. If the call note is not complete, the method passes via the no branch to block 314, wherein the process of creating the call note continues. If, however, the call note is complete, method 300 stores the call note in memory, as illustrated at block 318.

Once the call note has been completed and stored, method 300 displays a call note indicator on the active call screen, as depicted at block 320. Thus, before the active call is terminated, the active call screen is updated to indicate the creation, association, and availability of the new call note with the current active call (e.g., associated with a log entry of the active call). In one embodiment, the call note indicator can be an icon 44 displayed on the active call screen 46 (see FIG. 4). In other embodiments, the call note indicator can be an illuminated light or LED. In yet another embodiment, the call note indicator can be another modification to the active call screen, such as, for example, showing a phone number in a bold or italicized typeface. The indication of call note availability can include indicating that the call note is available for further processing, such as displaying, editing, deleting, forwarding, archiving, duplicating, or other similar functions or processes.

If, at block 306, the user selects a recall note function, method 300 can display an indication of all available call notes associated with the active call, as illustrated at block 322, and in FIG. 6. Such a display can be implemented with a menu or a list 48 that shows identifying data 50 for each available call note. Such identifying data can include, for example, a list of numbers representing available call notes, a list of call note titles, or a portion of the text of each available call note.

Next, at block 324, method 300 determines whether or not the user has selected a call note to recall. If the user has not selected a call note, the process iteratively loops, as shown by the no branch from block 324.

If the user has selected a call note for recall, the method recalls the selected call note from memory, displays the selected call note, and permits editing of the selected call note, as illustrated at block 326. The display of the recalled call note can appear similar to the display shown in FIG. 5, wherein text 40 is shown in area 42.

Thereafter, method 300 determines whether or not the user has closed the recalled call note, as depicted at block 328. If the selected call note has not been closed, the method continues to display and allow editing of the call note, as the method passes back to block 326. If the selected call note has been closed, the method updates and stores the call note if any changes were made, and then passes to block 306, wherein the method determines whether or not the user has requested the call note menu, and otherwise continues to process the active call.

In one embodiment of the disclosure, more than one call note can be created during an active call. For example, during a conference call, a user may make several call notes regarding different items of business. If more than one call note is created, icon 44 can be amended to indicate a number of call notes associated with the active call. As an example, number 52 can be shown proximate to, or incorporated with, icon 44, as shown in FIG. 5.

In some embodiments of the disclosure, once the active call screen has been updated with icon 44, icon 44 can become an active button that can be selected and activated to invoke additional functions regarding the call notes on the active call. For example, selecting icon 44 can begin a call notes recall function that lists call notes associated with the active call and allows the selection and display of a particular call note. Additional functions invoked can include forwarding the call note via email or short message, associating the call note with a calendar date, associating a call note with a contact in an address book, or other similar functions.

In other embodiments of the present disclosure, call notes can include other types of data, such as graphical or pictorial data, audio data, video data, location data, time data, or other record or data types. To indicate another data type, icon 44 can be customized according to the data type. For example, if the call note contains a picture, icon 44 can include an element that resembles a camera. Icons 44 associated with a call note containing sound data can include an element that resembles a speaker.

Presently preferred embodiments of the disclosure, and many improvements and advantages thereof, have been described with particularity. The description includes preferred examples of implementing the disclosure, and these descriptions of preferred examples is not intended to limit the scope of the disclosure. The scope of the disclosure is defined by the following claims.

## Claims

1. A wireless device (20) comprising:
a processor (102);
a communications subsystem (104) coupled to the processor for making a wireless call;
a data input device coupled to the processor for entering call note data;
a call note management module (138) coupled to the processor for receiving the call note data during an active call;
a memory (114) coupled to the processor for storing the call note data; and
a display (24) coupled to the call note management module;
**characterized in that** the wireless device (20) is operable to display an icon (44) that indicates status information associated with the call note during the active call, the icon forming an active button the selection of which invokes an additional function regarding the call note on the active call.

2. The wireless device (20) of claim 1 wherein the call note data further comprises text data (40).

3. The wireless device (20) of claim 1 wherein the data input device further comprises a keyboard (22).

4. The wireless device (20) of claim 1 wherein the icon (44) indicates a number (52) of call notes associated with the active call.

5. The wireless device (20) of claim 1 wherein the memory (114) further comprises a memory for storing the call note management module (138).

6. A method (300) for managing call notes in a wireless device (20), said method comprising:
displaying an active call screen (46) during an active call;
during the active call, storing (318) a new call note associated with the active call;
the method **characterized by** further comprising:
updating (320) the active call screen with an icon (44) to indicate availability of the new call note, the icon forming an active button the selection of which invokes an additional function regarding the new call note on the active call.

7. The method (300) of claim 6 wherein the updating (320) the active call screen (46) to indicate availability of the new call note further comprises displaying an icon (44) on the active call screen to indicate a number (52) of available call notes that are associated with the active call.

8. The method (300) of claim 7 further comprising displaying a number (52) as part of the icon (44) to indicate the number of available call notes associated with the active call.

9. The method (300) of claim 6 further comprising in response to recalling a call note in an active call, indicating (322) the availability of all call notes associated with the active call.

10. The method (300) of claim 6 wherein the indicating (322) the availability of all call notes associated with the active call further comprises displaying information associated with each of the call notes in a menu.

11. The method (300) of claim 6 wherein the updating (320) the active call screen (46) to indicate availability of the new call note comprises updating the active call screen to indicate a call note type for the new call note.

12. The method (300) of claim 11 wherein the updating (320) the active call screen (46) to indicate a call note type of the new call note comprises updating the active call screen to indicate an image call note type for the new call note.

13. The method (300) of claim 6 further comprising displaying status information during active call.

## Patentansprüche

1. Drahtlose Vorrichtung (20), umfassend:
einen Prozessor (102);
ein mit dem Prozessor gekoppeltes Kommunikationssubsystem (104) zur Durchführung eines drahtlosen Anrufs;
eine mit dem Prozessor gekoppelte Dateneingabevorrichtung zur Eingabe von Gesprächsnotizdaten;
ein mit dem Prozessor gekoppeltes Gesprächsnotiz-Verwaltungsmodul (138) zum Empfangen der Gesprächsnotizdaten während eines aktiven Gesprächs;
einen mit dem Prozessor gekoppelter Speicher (114) zum Speichern der Gesprächsnotizdaten; und
eine mit dem Gesprächsnotiz-Verwaltungsmodul gekoppelte Anzeige (24), wobei die drahtlose Vorrichtung (20) **dadurch gekennzeichnet ist, dass**
die Anzeige (24) geeignet ist, ein Icon (44) anzuzeigen, das während des aktiven Gesprächs der Gesprächsnotiz zugeordnete Statusinformationen anzeigt, wobei das Icon eine aktive Schaltfläche bildet, deren Auswahl eine zusätzliche Funktion betreffend die Gesprächsnotiz zu dem aktiven Gespräch aufruft.

2. Drahtlose Vorrichtung (20) nach Anspruch 1, wobei die Gesprächsnotizdaten ferner Textdaten (40) umfassen.

3. Drahtlose Vorrichtung (20) nach Anspruch 1, wobei die Dateneingabevorrichtung ferner eine Tastatur (22) umfasst.

4. Drahtlose Vorrichtung (20) nach Anspruch 1, wobei das Icon (44) eine Anzahl (52) von dem aktiven Gespräch zugeordneten Gesprächsnotizen anzeigt.

5. Drahtlose Vorrichtung (20) nach Anspruch 1, wobei der Speicher (114) ferner einen Speicher zum Speichern des Gesprächsnotiz-Verwaltungsmoduls (138) umfasst.

6. Verfahren (300) zum Verwalten von Gesprächsnotizen in einer drahtlosen Vorrichtung (20), wobei das Verfahren umfasst:
Anzeigen eines aktiven Gesprächsbildschirms (46) während eines aktiven Gesprächs;
während des aktiven Gesprächs Speichern (318) einer dem aktiven Gespräch zugeordneten neuen Gesprächsnotiz; wobei das Verfahren **dadurch gekennzeichnet ist, dass** es ferner die Schritte umfasst:
Aktualisieren (320) des aktiven Gesprächsbildschirms mit einem Icon (44), um eine Verfügbarkeit der neuen Gesprächsnotiz anzuzeigen, wobei das Icon eine aktive Schaltfläche bildet, deren Auswahl eine zusätzliche Funktion betreffend die neue Gesprächsnotiz zu dem aktiven Gespräch aufruft.

7. Verfahren (300) nach Anspruch 6, wobei das Aktualisieren (320) des aktiven Gesprächsbildschirms (46) zur Angabe einer Verfügbarkeit der neuen Gesprächsnotiz ferner das Anzeigen eines Icons (44) auf dem aktiven Gesprächsbildschirm umfasst, um eine Anzahl (52) verfügbarer Gesprächsnotizen anzuzeigen, die dem aktiven Gespräch zugeordnet sind.

8. Verfahren (300) nach Anspruch 7, ferner umfassend das Anzeigen einer Anzahl (52) als Teil des Icons (44) zur Anzeige der Anzahl verfügbarer Gesprächsnotizen, die dem aktiven Gespräch zugeordnet sind.

9. Verfahren (300) nach Anspruch 6, ferner umfassend, in Reaktion auf das Abrufen einer Gesprächsnotiz in einem aktiven Gespräch, das Anzeigen (322) der Verfügbarkeit aller dem aktiven Gespräch zugeordneten Gesprächsnotizen.

10. Verfahren (300) nach Anspruch 6, wobei das Anzeigen (322) der Verfügbarkeit aller dem aktiven Gespräch zugeordneten Gesprächsnotizen ferner das Anzeigen von Informationen umfasst, die jedem der Gesprächsnotizen in einem Menü zugeordnet sind.

11. Verfahren (300) nach Anspruch 6, wobei das Aktualisieren (320) des aktiven Gesprächsbildschirms (46) zur Angabe einer Verfügbarkeit der neuen Gesprächsnotiz das Aktualisieren des aktiven Gesprächsbildschirms umfasst, um eine Gesprächsnotizart für die neue Gesprächsnotiz anzuzeigen.

12. Verfahren (300) nach Anspruch 11, wobei das Aktualisieren (320) des aktiven Gesprächsbildschirms (46) zur Angabe einer Gesprächsnotizart der neuen Gesprächsnotiz das Aktualisieren des aktiven Gesprächsbildschirms umfasst, um eine Notizart eines Bildtelefonats für die neue Gesprächsnotiz anzuzeigen.

13. Verfahren (300) nach Anspruch 6, ferner umfassend das Anzeigen von Statusinformationen während eines aktiven Gesprächs.

## Revendications

1. Dispositif sans fil (20) comprenant :
un processeur (102) ;
un sous-système de communication (104) couplé au processeur afin d'effectuer un appel sans fil ;
un dispositif de saisie de données couplé au processeur afin de saisir des données de note d'appel ;
un module de gestion des notes d'appel (138) couplé au processeur et destiné à recevoir les données de note d'appel pendant un appel actif ;
une mémoire (114) couplée au processeur et destinée à enregistrer les données de note d'appel ; et
un écran d'affichage (24) couplé au module de gestion des notes d'appel ;
**caractérisé en ce que** le dispositif sans fil (20) est en mesure d'afficher une icône (44) qui indique des informations d'état associées à la note d'appel pendant l'appel actif, l'icône constituant un bouton actif dont la sélection appelle une fonction supplémentaire concernant la note d'appel sur l'appel actif.

2. Dispositif sans fil (20) selon la revendication 1, dans lequel les données de note d'appel comprennent en outre des données textuelles (40).

3. Dispositif sans fil (20) selon la revendication 1, dans lequel le dispositif de saisie de données comprend en outre un clavier (22).

4. Dispositif sans fil (20) selon la revendication 1, dans lequel l'icône (44) indique un nombre (52) des notes d'appel associées à l'appel actif.

5. Dispositif sans fil (20) selon la revendication 1, dans lequel la mémoire (114) comprend en outre une mémoire destinée à enregistrer le module de gestion des notes d'appel (138).

6. Procédé (300) de gestion des notes d'appel sur un dispositif sans fil (20), ledit procédé comprenant les étapes consistant à :
afficher un écran d'appel actif (46) pendant un appel actif ;
pendant l'appel actif, enregistrer (318) une nouvelle note d'appel associée à l'appel actif ;
le procédé étant **caractérisé en ce qu'**il comprend en outre l'étape consistant à :
mettre à jour (320) l'écran d'appel actif avec une icône (44) pour indiquer la disponibilité de la nouvelle note d'appel, l'icône constituant un bouton actif dont la sélection appelle une fonction supplémentaire concernant la note d'appel sur l'appel actif.

7. Procédé (300) selon la revendication 6, dans lequel l'étape de mise à ajour (320) de l'écran d'appel actif (46) pour indiquer la disponibilité de la nouvelle note d'appel comprend en outre l'étape consistant à afficher sur l'écran d'appel actif une icône destinée à indiquer un nombre (52) des notes d'appel disponibles qui sont associées à l'appel actif.

8. Procédé (300) selon la revendication 7, comprenant en outre l'étape consistant à afficher un nombre (52) sous la forme d'une partie de l'icône (44) pour indiquer le nombre des notes d'appel disponibles qui sont associées à l'appel actif.

9. Procédé (300) selon la revendication 6, comprenant en outre, après qu'une note d'appel a été rappelée dans l'appel actif, l'étape consistant à indiquer (322) la disponibilité de toutes les notes d'appel associées à l'appel actif.

10. Procédé (300) selon la revendication 6, dans lequel l'étape d'indication (322) de la disponibilité de toutes les notes d'appel associées à l'appel actif comprend en outre l'étape consistant à afficher des informations associées à chacune des notes d'appel dans un menu.

11. Procédé (300) selon la revendication 6, dans lequel l'étape de mise à jour (320) de l'écran d'appel actif (46) pour indiquer la disponibilité de la nouvelle note d'appel comprend l'étape consistant à mettre à jour l'écran d'appel actif pour indiquer un type de note d'appel pour la nouvelle note d'appel.

12. Procédé (300) selon la revendication 11, dans lequel l'étape de mise à jour (320) de l'écran d'appel actif (46) pour indiquer un type de note d'appel pour la nouvelle note d'appel comprend l'étape consistant à mettre à jour l'écran d'appel actif pour indiquer un type de note d'appel illustré pour la nouvelle note d'appel.

13. Procédé (300) selon la revendication 6, comprenant en outre l'étape consistant à afficher des informations d'état pendant l'appel actif.
